# EUROPEAN PATENT APPLICATION

(11) **EP 0 886 433 A2**
(43) Date of publication of application: **23.12.1998**
(21) Application number: 98111338.4
(22) Date of filing: 19.06.1998
(51) Int. Cl.: H04N 1/327

(54) **Communication device**

(30) Priority: 19.06.1997 JP 162833/97
(71) Applicant: MITA INDUSTRIAL CO. LTD., Osaka 540 (JP)
(72) Inventor: Matsuo, Kohichi, Tamatsukuri, Chuo-ku, Osaka-shi Osaka-fu (JP); Mori, Toshihiro, Tamatsukuri, Chuo-ku, Osaka-shi Osaka-fu (JP); Sugimoto, Tetsuya, Tamatsukuri, Chuo-ku, Osaka-shi Osaka-fu (JP); Shibata, Koichi, Sakai-shi, Osaka-fu (JP); Oyama, Masakazu, Yamatokoriyama-shi, Nara-ken (JP)
(74) Representative: Müller-Boré & Partner Patentanwälte

(57) **Abstract**

A communication device provided between a data terminal equipment and a telephone line converts an analog signal which is transmitted from a communicating terminal via a telephone line into a digital signal to enable the data terminal equipment to receive A/D converted data in accordance with a command signal from the data terminal equipment. The communication device has a line connector for connecting the phone line with the data terminal equipment upon receiving a ring back signal from the communicating terminal, a judgement unit for judging whether the communicating terminal is a facsimile machine based on a certain signal transmitted from the communicating terminal via the phone line immediately after the line connection, and a signal transmitter for transmitting the data terminal equipment a certain arrival signal representative of arrival of data from the communicating terminal when the judgement unit judges that the communicating terminal is the facsimile machine. The communication device transmits the arrival signal to the data terminal equipment exclusively when it is judged that the communicating terminal is the facsimile machine, thereby facilitating data reception from the facsimile machine and improving a data reception efficiency.

## Description

### BACKGROUND OF THE INVENTION

This invention relates to a communication device which is provided between a data terminal equipment such as a personal computer and a telephone line to enable the data terminal equipment to receive data transmitted through the telephone line.

As communication devices, there have been known a modem, and a facsimile machine with an interface unit such as an RS-232C and a parallel interface. The latter communication device, i.e., the facsimile machine is externally connectable to a personal computer (PC) to function as a modem for the PC.

It is a common practice in the modem of prior art that the modem transmits a certain code signal (RING signal) to the PC upon receiving a ring back signal (tonal signal) from a communicating terminal to notify the PC of arrival of data from the communicating terminal. Then, the PC transmits a certain command signal to the modem in response to the RING signal. Upon receiving the command (signal) from the PC, the modem converts data, which has been transmitted from the communicating terminal in the form of an analog signal through the phone line, into data in the form of a digital signal (A/D converted data) to transfer the A/D converted data to the PC.

Further, it is a common practice in the facsimile machine of prior art which is externally connectable to a PC for communication with the PC that a mode setting switch is provided on an operation panel of a facsimile machine main body to selectively set the facsimile machine at a FAX RECEIVE mode in which the facsimile machine is prioritized to receive data (facsimile data) which has been transmitted from a facsimile machine and a PC RECEIVE mode in which the PC is prioritized to directly receive the facsimile data.

In the facsimile machine provided with the PC RECEIVE mode and having a function as a modem, when receiving a ring back signal from a communicating terminal, the facsimile machine transmits a certain RING code signal to the PC to notify the PC of arrival of data. Upon receiving a certain command from the PC in response to the RING code signal, the facsimile machine converts an analog signal transmitted from the communicating terminal into a digital signal to transfer A/D converted data to the PC.

The above facsimile machine having a function as a modem has the following problem. The PC RECEIVE mode is set on an assumption that the communicating terminal is a facsimile machine. Accordingly, in the case where a communicating terminal or a calling station is a phone, communication is disabled between the facsimile machine and the communicating terminal for the following reason.

When set at the PC RECEIVE mode, the facsimile machine notifies the PC of data arrival from the communicating terminal without a judgement as to whether the communicating terminal is a facsimile machine or a phone. In the case where the communicating terminal is a telephone, and accordingly, a sound signal (analog signal) is transmitted from the phone, the PC cannot receive the sound signal. As a result, what happens is a communication disabled state between the calling station and the PC despite the connected state of the phone line. This communication disabled state continues until a person at the calling station hangs up the phone.

In other words, when the facsimile machine is set at the PC RECEIVE mode, and a source of an analog signal transmitted through the phone line is a telephone, the modem tries in vain to convert the analog signal to a digital signal, causing a communication disabled state between the PC and the communicating terminal (i.e., phone) despite the line connected state. Further, extended time of this communication disabled state deteriorates a communication efficiency of the PC and the calling station.

The above problem also happens in the case where a modem as a single unit (i.e., without a function as a facsimile machine) is used in the PC, as far as the modem has a function of merely notifying the PC of arrival of data from a communicating terminal without a judgement as to whether the communicating terminal is a facsimile machine or a phone.

### SUMMARY OF THE INVENTION

In view of the above problems of the prior art, it is an object of the present invention to provide a communication device that enables a data terminal equipment to receive data from a communicating terminal exclusively when the communicating terminal is judged to be a facsimile machine to improve data receiving efficiency.

To fulfil the above object, this invention is directed to a communication device provided between a data terminal equipment and a telephone line for converting data of an analog signal which is transmitted from a communicating terminal via the telephone line into data of a digital signal to enable the data terminal equipment to receive the data transmitted from the communicating terminal in accordance with a command signal from the data terminal equipment. The communication device has a line connector for connecting the telephone line with the communicating terminal upon receiving a ring back signal from the communicating terminal; a judgement unit for judging whether the communicating terminal is a facsimile machine based on a certain signal transmitted from the communicating terminal via the telephone line immediately after the line connection; and a signal transmitter for transmitting the data terminal equipment a certain arrival signal representative of arrival of data from the communicating terminal when the judgement unit judges that the communicating terminal is the facsimile machine.

In this arrangement, the communication device transmits the arrival signal to the data terminal equipment exclusively when it is judged that the communicating terminal is the facsimile machine. Thereby, data reception at the data terminal equipment is facilitated, and data reception efficiency is improved.

These and other objects, features and advantages of the present invention will become more apparent upon a reading of the following detailed description and accompanying drawings.

### BRIEF DESCRIPTION OF THE DRAWINGS

FIG. 1 is a block diagram of a facsimile machine as a first embodiment according to this invention;
FIGS. 2 and 3 are flowcharts showing a control operation when the facsimile machine is set at a PC RECEIVE mode in the first embodiment;
FIG. 4 is a diagram showing a sequence of signal transmission/reception among a communicating terminal (calling station), a call receiver and a personal computer (PC) when the facsimile machine is set at the PC RECEIVE mode, and the calling station is a telephone in the first embodiment;
FIG. 5 is a diagram showing a sequence of signal transmission/reception among the calling station, the call receiver and the PC when the facsimile machine is set at the PC RECEIVE mode, and the calling station is a facsimile machine in the first embodiment;
FIGS. 6 and 7 are flowcharts showing a control operation of a facsimile machine as a second embodiment when the facsimile machine is set at the PC RECEIVE mode;
FIG. 8 is a diagram showing a sequence of signal transmission/reception among a communicating terminal (calling station), a call receiver and a PC when the facsimile machine is set at the PC RECEIVE mode, and the calling station is a telephone in the second embodiment;
FIG. 9 is a diagram showing a sequence of signal transmission/reception among the calling station, the call receiver and the PC when the facsimile machine is set at the PC RECEIVE mode, and the calling station is a facsimile machine in the second embodiment; and
FIG. 10 is a block configuration diagram of a modem as another embodiment according to this invention.

### DETAILED DESCRIPTION OF THE INVENTION

Preferred embodiments of this invention are described with reference to the accompanying drawings.

To summarize this invention, this invention is directed to a communication device which is provided between a data terminal equipment such as a personal computer and a telephone line to be communicable with the data terminal equipment. The communication device receives data which is transmitted from a communicating terminal or a calling station through the phone line in the form of an analog signal according to a command signal from the data terminal equipment, while converting the analog signal into a digital signal (A/D converted data) to transfer the A/D converted data to the data terminal equipment. Thereby, the data terminal equipment is enabled to directly receive the data from the communicating terminal.

The communication device is configured such that it is judged whether the communicating terminal is a facsimile machine upon receiving a call from the communicating terminal, i.e., judged whether data from the communicating terminal is image data which is enabled to be received by the data terminal equipment, and the data arrival is notified to the data terminal equipment exclusively when it is judged that the communicating terminal is the facsimile machine. Thus, the communication device allows the data terminal equipment to directly receive the data from the communicating terminal exclusively when it is judged that the receivable data is transmitted.

Generally, the above communication device can be realized by a modem which is interposed between a personal computer (PC) and a telephone line, and a facsimile machine which is externally connectable to a PC to be communicable with the PC. Accordingly, a facsimile machine is described as an embodiment (first and second embodiments) of this invention, and a modem is described as another embodiment.

### [First Embodiment]

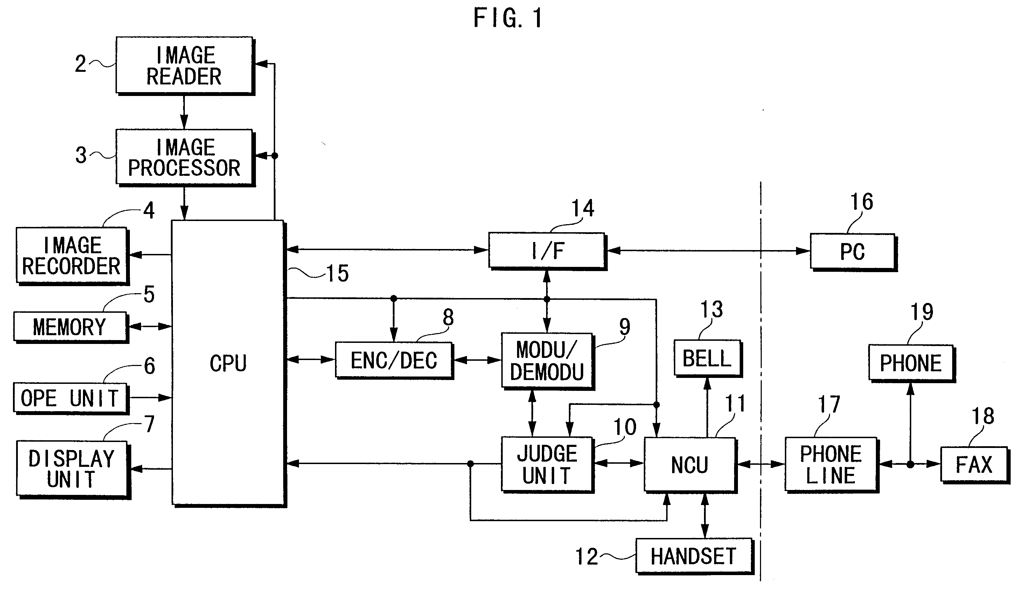

A first embodiment of this invention is described with reference to FIGS. 1 to 5. FIG. 1 is a block configuration diagram of a facsimile machine as the first embodiment.

Reference numeral 1 denotes the facsimile machine. The facsimile machine 1 is externally connectable with a personal computer (PC) 16, and is incorporated with a communication function of processing data in accordance with a command from the PC 16 when connected to the PC 16, besides a function of facsimile data transmission/reception.

In particular, as the communication function, the facsimile machine 1 is settable to a PC RECEIVE mode. When the facsimile machine 1 is set to the PC RECEIVE mode, the facsimile machine 1 allows the PC 16 to directly receive image data transmitted from a facsimile machine 18 (hereinafter, merely referred to as a "FAX 18").

The facsimile machine 1 comprises an image reader 2, an image processor 3, an image recorder 4, a memory 5, an operation unit 6, a display unit 7, an encoder/decoder 8, a modulator/demodulator 9, a FAX/TEL judgement unit 10, a network control unit (NCU) 11, a telephone receiver (or a handset) 12, a ringer or a bell 13, an interface unit 14, and a controller (Central Processing Unit, or CPU) 15.

The image reader 2 reads an image of an original document which is to be transmitted to the FAX 18 when data is to be transmitted to the FAX 18. The image processor 3 applies a certain signal processing (such as signal level correction, gamma correction, and analog-to-digital data conversion) to an image signal (image data) read by the image reader 2. The image reader 2 includes an automatic document transporter for transporting an original document in a specified transport direction, and an image pickup unit including a CCD line image sensor. The original document image is scanned line after line by the image pickup unit while the original document is transported in the specified transport direction to read the whole image of the original document, and the scanned whole image is outputted to the image processor 3 as image data.

The image recorder 4 records image data scanned by the image reader 2 (hereinafter, referred to as "read data"), data transmitted from the FAX 18 (hereinafter, referred to as "received data"), and data transmitted from the PC 16 (hereinafter, referred to as "PC data") on recording paper after an image processing by the image processor 3. The image recorder 4 includes, e.g., a laser printer, and is constructed such that laser beam which is modulated according to pixel data constituting an image to be recorded (or print image) is projected on a photosensitive member to form an electrostatic latent image of the print image, the latent image is developed into a toner image by electrostatic attraction of toner, and the developed toner image is transferred on recording paper to form the print image thereon.

The memory 5 is a memory capable of storing read data, received data, and PC data therein, i.e., a memory with a capacity of storing, e.g., data corresponding to approximately 100 A4-sized documents.

The operation unit 6 is used to set various modes and conditions such as input of the facsimile number of a facsimile machine to which data is to be transmitted, designation of data transmission start/stop, registration of fax/phone numbers through a single button dialing and an abbreviated dialing, and setting of PC RECEIVE mode. Various key switches such as a PC RECEIVE mode set/release key switch, a numeric ten key, a single button dialing key are provided on the operation unit 6 to set the above various modes and conditions. The operation unit 6 is provided on an operation panel of the facsimile machine 1.

The display unit 7 includes monitors of a Liquid Crystal Display (LCD) and a Light Emitting Diode (LED), and displays various states such as a connected or a disconnected state of a phone line, a state as to whether data is being transmitted/received, and a state as to whether communication is enabled between the PC 16 and the facsimile machine 1, and the name of the sender and the facsimile number of the FAX 18 when the data is transmitted from the FAX 18 through character information on the monitors such as an LCD monitor.

The display unit 7 further displays a status as to whether a communication error has occurred, the mode currently set in the facsimile machine 1 (including the PC RECEIVE mode), the degree of image quality of received data, an enabled or disabled state of data reception via a buffer memory (i.e., a state as to whether data can be temporarily stored in the buffer memory), and a necessity of service. The display unit 7 is also provided on the operation panel of the facsimile machine 1.

The encoder/decoder 8 compresses and encodes data (image data) to be transmitted to the FAX 18, and expands and decodes data (image data) which is to be received by the facsimile machine 1.

The modulator/demodulator 9 modulates the compressed/encoded image data to a sound signal, and demodulates a sound signal which is received by the facsimile machine 1 to image data. The FAX/TEL judgment unit 10 judges whether a communicating terminal to which a phone line 17 is connected is a facsimile machine (hereinafter, referred to as "FAX 18") or a phone (hereinafter, referred to as "PHONE 19") when receiving a call from the communicating terminal. The FAX/TEL judgement unit 10 judges, e.g., whether the communicating terminal is the FAX 18 or the PHONE 19 based on the presence or absence of e.g. CNG signal (tonal signal indicating a facsimile transmission) or the presence or absence of a sound signal (signal ranging from e.g., 300 Hz to 3.4 kHz).

The NCU 11 controls switching of a connection between the phone line 17 and the FAX/TEL judgment unit 10, and a connection between the phone line 17 and the telephone receiver 12 which is externally provided on a main body of the facsimile machine 1. When the FAX/TEL judgement unit 10 judges that the communicating terminal is the PHONE 19 when receiving a call from the communicating terminal, the NCU 11 controls the ringer 13 to ring a bell to notify a person or persons around the facsimile machine 1 of the call from the communicating terminal. When the telephone receiver 12 is picked up (hooked off from the facsimile machine 1) within ten rings (ten calls) from the ringer 13, the NCU 11 detects that the telephone receiver 12 is hooked off, and connects the phone line 17 with the telephone receiver 12, thereby enabling a phone talk between the communicating terminal (PHONE 19) and the facsimile machine 1 which now functions as a phone.

The interface unit 14 enables communication between the PC 16 and the facsimile machine 1 when the facsimile machine 1 is externally connected to the PC 16, and includes, e.g., an RS-232C interface. The interface unit 14 is not limited to the interface of RS-232C standards, as far as communication is enabled between the PC 16 and the facsimile machine 1.

The telephone receiver 12 allows a person to converse with a person over the phone line 17. The telephone receiver 12 consists of a phone transmitter through which a sound signal is converted into an electric signal and a phone receiver through which an electric signal is converted into a sound signal.

The ringer or the bell 13 is a sound generator for notifying a person or persons around the facsimile machine 1 of a call from the PHONE 19 of the communicating terminal to establish a phone conversation via the telephone receiver 12 when the call is from the PHONE 19.

The CPU 15 includes a microcomputer, and centrally controls facsimile data transmission/reception, copying, and communication with the PC 16 by controlling the respective elements (the image reader 2, the image processor 3, the image recorder 4, the memory 5, the operation unit 6, the display unit 7, the encoder/decoder 8, the modulator/demodulator 9, the FAX/TEL judgment unit 10, the NCU 11, the telephone receiver 12, the ringer 13, and the interface unit 14).

The CPU 15 is internally provided with an ROM, an RAM, and a data buffer (buffer memory). The ROM stores a processing program for facsimile data transmission/reception and copying, a communication program for communication with the PC 16, and various data for processing (e.g., data relating to control of an exposure light amount of a light source of the image reader 2 and an image density used in image development by the image recorder 4, data concerning a message such as alerting and operation procedures) therein. The RAM is adapted for performing a certain computation according to the program. The data buffer temporarily stores PC data transmitted from the PC 16 therein.

The facsimile machine 1 includes a communication protocol in which an AT command (a command signal starting with "AT") is used. When functioning as a peripheral device to the PC 16, the facsimile machine 1 is controlled according to the AT command. It should be noted that any type of command which is standardized by the Electronic Industries Association (EIA) is usable in this facsimile machine including "Class 1 Command", and "Class 2 Command".

When set to the PC RECEIVE mode and externally connected to the PC 16, the facsimile machine 1 functions as a modem for the PC 16 to be operable according to a command from the PC 16. When the facsimile machine 1 functions as the modem, the PC 16 is enabled to directly receive data transmitted from the FAX 18.

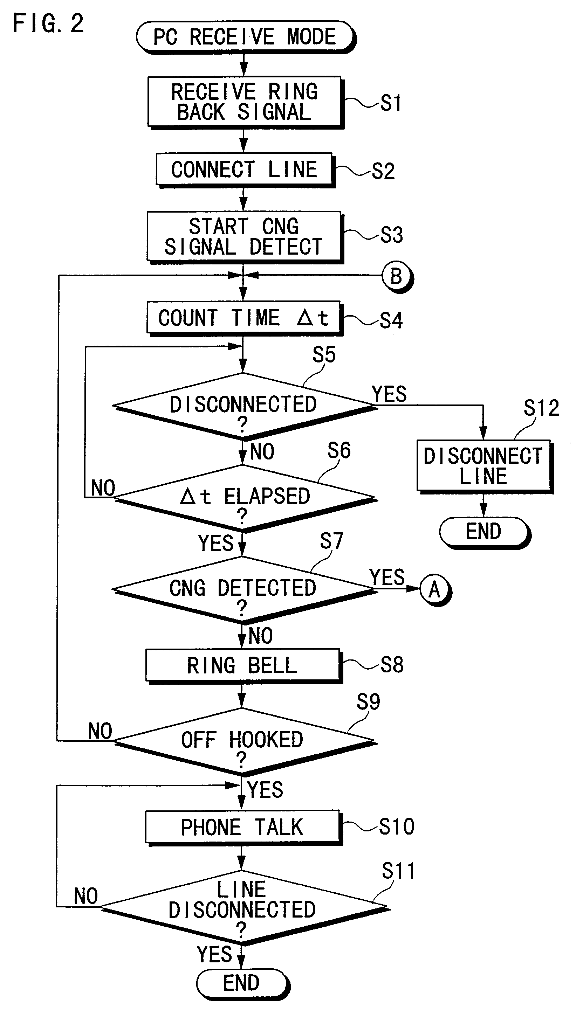

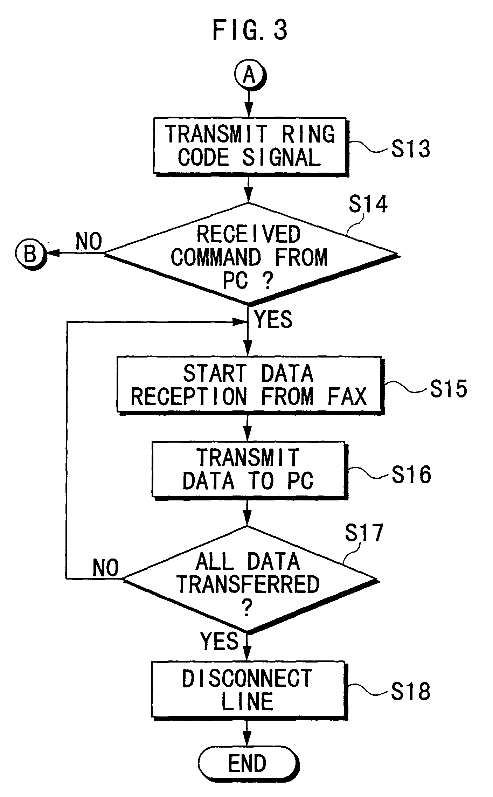

Next, a control as to how the PC 16 is prioritized to receive data when the facsimile machine 1 is set to the PC RECEIVE mode is described referring to flowcharts in FIGS. 2 and 3.

When the NCU 11 receives a ring back signal (tonal signal) from the communicating terminal (in Step S1), the NCU 11 connects the phone line 17 with the FAX/TEL judgement unit 10 (in Step S2). Then, the FAX/TEL judgement unit 10 initiates judgement process as to whether a CNG signal, a call signal from a facsimile machine, is detected (in Step S3).

The judgement of CNG signal detection is periodically performed for a certain time duration Δt (the loop through Steps S4 to S7). If a CNG signal is not detected within the certain time Δt (NO in Step S7), the FAX/TEL judgement unit 10 judges that the communicating terminal is the PHONE 19, and controls the ringer or the bell 13 to ring a bell to enable a phone talk over the telephone receiver 12 (in Step S8).

Subsequently, it is judged whether the telephone receiver 12 is picked up from the facsimile machine main body, i.e., set to an off-hook state in response to the bell (in Step S9). If it is judged that the telephone receiver 12 is not picked up (NO in Step S9), this routine returns to Step S4 to repeat a judgement process of a CNG signal detection within the certain time Δt (Step S7) and ringing of the bell 13 (Step S8) indicative of non-detection of a CNG signal. The judgement of a CNG signal detection is repeated for a certain times to set a timing for periodically ringing the bell 13. Alternatively, a timer may be incorporated in the NCU 11 to count a time to set a timing for ringing the bell 13.

When a person picks up the telephone receiver 12 from the facsimile machine main body in response to a bell of the ringer 13 (YES in Step S9), the phone line 17 is connected to the telephone receiver 12 via the NCU 11 to establish a telephone communication with the communicating terminal (PHONE 19) (in Step S10). When the phone talk is finished, and the person hangs up the telephone receiver 12 on the facsimile machine main body (YES in Step S11), data reception (this time, the phone talk) is finished.

On the other hand, when the phone line 17 is disconnected by a hang-up operation of the communicating terminal during the bell ringing (YES in Step S5), this routine proceeds to Step S12 to cause the NCU 11 to disconnect the phone line 17 to stop the bell ringing.

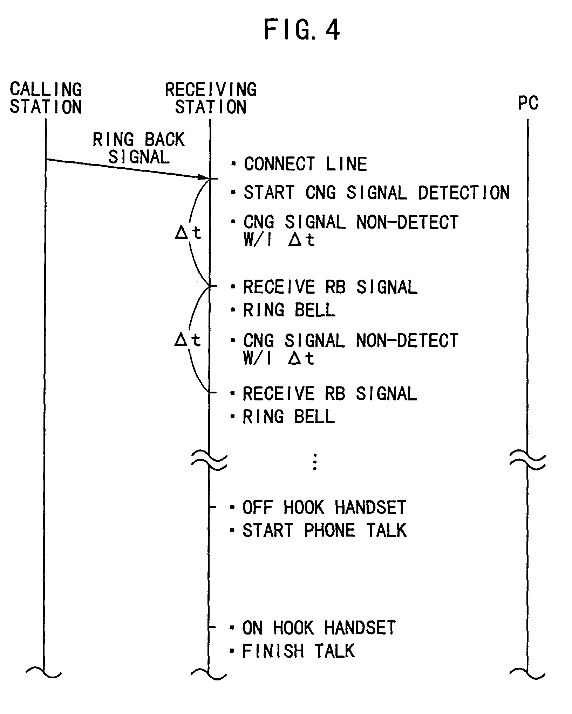

FIG. 4 is a diagram showing a sequence of a signal transmission/reception among a calling station (transmitter), a receiving station (call receiver), and the PC 16 in the case where the communicating terminal (i.e., the calling station) is the PHONE 19 and the facsimile machine 1 is set to the PC RECEIVE mode.

Referring to FIG. 4, upon receiving a ring back signal (tonal signal) from the calling station, the NCU 11 connects the phone line 17 to the FAX/TEL judgement unit 10 to judge whether a CNG signal is transmitted from the calling station. If the CNG signal is not detected within a certain time Δt, and accordingly, it is judged that the calling station is the PHONE 19, the time at which a CNG signal has not been detected within the certain time Δt is used as a timing for ringing the bell 13. In other words, just after a lapse of the certain time Δt without a detection of a CNG signal, the bell 13 rings to alert a person or persons around the facsimile machine 1 of a call from the calling station. This operation is periodically performed at every certain time Δt. Finally, when the telephone receiver 12 is picked up from the facsimile machine main body, a phone talk with the calling station is enabled.

In this embodiment, the detection process of a CNG signal is repeated for a certain times even after it is judged that the calling station is the PHONE 19 for the following reasons. If the calling station is the PHONE 19, a CNG signal is detected for no reason. However, the timing of the periodical judgment process, despite the fact that a single detection result - absence of a CNG signal- will be suffice, used to ring the bell 13 at the certain frequency. These periodical attempts to detect the CNG signal at least enhance the credibility of the judgement result of the first detection that found the absence of the CNG signal issued from the communication terminal.

As an altered form, when a CNG signal has not been detected after a certain number of repetitive attempts (i.e., a judgement result that the calling station is the PHONE 19 is repeatedly assured for a certain times), the attempt to detect the CNG signal may be stopped, and the ringer 13 may ring a bell at a certain frequency different from the detection frequency of a CNG signal.

Referring back to FIGS. 2 and 3, when a CNG signal is detected within the certain time Δt (YES in Step S7), it is judged that the communicating terminal is the FAX 18. Then, the CPU 15 transmits a RING signal (code signal indicative of arrival of data) to the PC 16 for enabling the PC 16 to directly receive data from the FAX 18 (in Step S13). The RING code signal is transmitted to the PC 16 each time when a CNG signal is detected (the loop through Steps S4 to S14). When a command indicative of allowing data reception is transmitted from the PC 16 in response to the RING code signal (YES in Step S14), data is started to be transmitted from the FAX 18 (in Step S15).

After a sound signal (analog signal) transmitted from the FAX 18 is demodulated by the modulator/demodulator 9 into a digital signal (A/D converted data), the converted data is inputted to the CPU 15 without being subject to decoding by the encoder/decoder 8, and is successively transferred to the PC 16 via the interface unit 14 according to a command from the PC 16 (in Step S16).

The data transferred to the PC 16 is decoded according to a software program for processing received data in the PC 16, thus subject to data reception processing. Upon receiving all data from the FAX 18 (YES in Step S17), the NCU 11 disconnects the phone line 17, thus completing data reception (in Step S18).

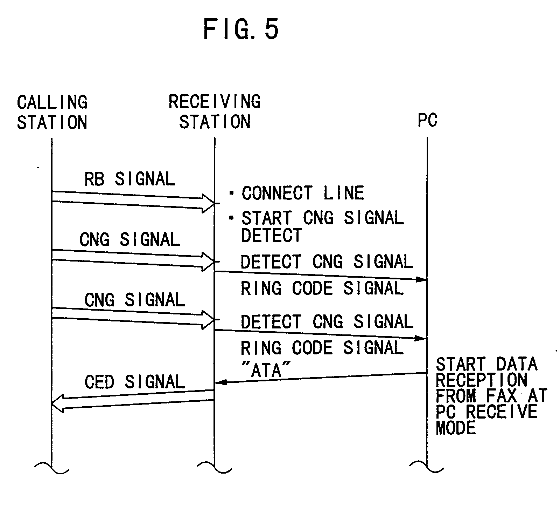

FIG. 5 is a diagram showing a sequence of a signal transmission/reception among the calling station (transmitter), the receiving station (call receiver), and the PC 16 in the case where the communicating terminal (i.e., the calling station) is the FAX 18, and the facsimile machine 1 is set to the PC RECEIVE mode.

Referring to FIG. 5, upon receiving a ring back signal from the calling station, the NCU 11 connects the phone line 17 with the facsimile machine 1 to start detection of a CNG signal from the calling station. When a CNG signal is detected within a certain time Δt, the CPU 15 starts transmitting a RING code signal to the PC 16. The RING code signal is transmitted for a certain number of times, i.e., each time when the CNG signal is detected. Upon receiving an "ATA" command signal which is transmitted from the PC 16 to the facsimile machine 1 in response to the RING code signal, the facsimile machine 1 operates as a modem for the PC 16, and allows the PC 16 to start receiving data from the FAX 18 according to a certain communication protocol.

### [Second Embodiment]

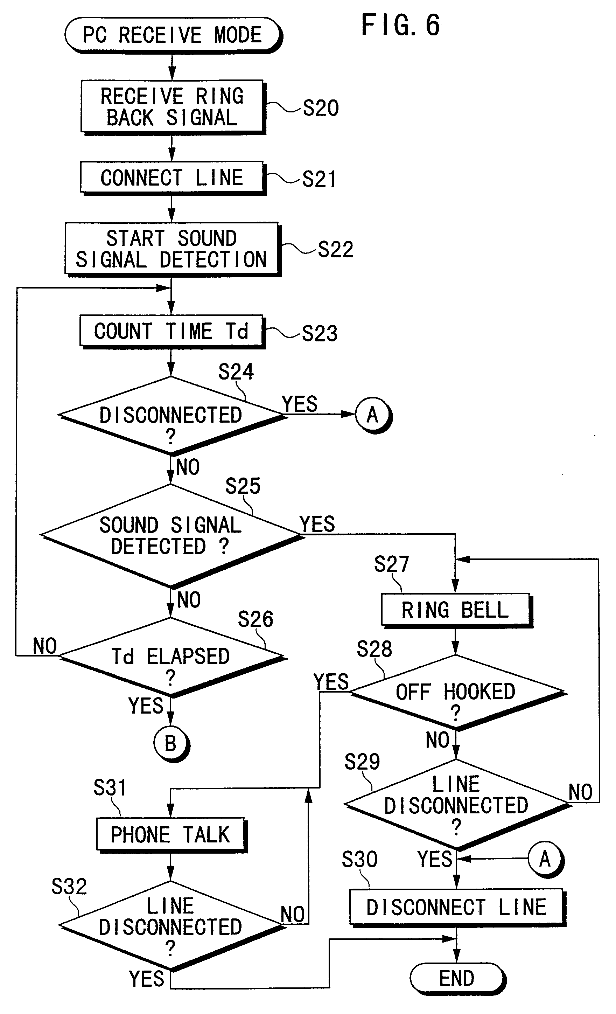

Next, a second embodiment of this invention is described with reference to FIGS. 6 to 9. It should be noted that elements in the second embodiment which are identical to those in the first embodiment are denoted by the same reference numerals.

In the first embodiment, it is judged whether the communicating terminal is the FAX 18 or the PHONE 19 based on a judgment as to whether a CNG signal is detected within a certain time Δt after the phone line 17 is connected. In the second embodiment, it is judged whether the communicating terminal is a FAX 18 or a PHONE 19 based on a judgement as to whether a sound signal (a signal ranging from e.g., 300 Hz to 3.4 kHz) occurs within a certain time Td after a line connection.

Generally, a person utters a sound after confirming that a phone line is connected to start a conversation with a communicating terminal. Accordingly, a FAX/TEL judgement unit 10 in the second embodiment judges that the communicating terminal is the FAX 18 if a sound signal is not detected within the certain time Td after the line connection.

The FAX/TEL judgement unit 10 in the second embodiment comprises a judgement circuit which judges whether the communicating terminal is the FAX 18 or the PHONE 19 based on the presence or absence of a sound signal, in place of a judgement circuit for judging the communicating terminal based on the presence or absence of a CNG signal in the first embodiment.

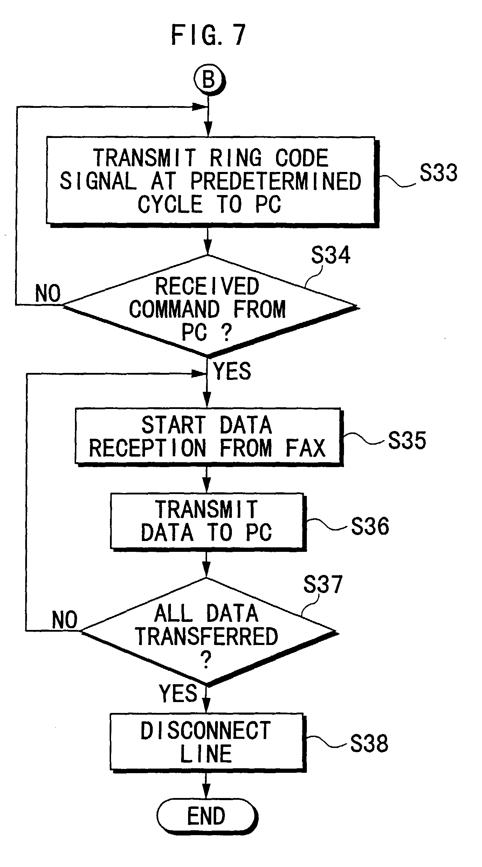

FIGS. 6 and 7 are flowcharts showing a control of data reception when a facsimile machine 1 of the second embodiment is set to the PC RECEIVE mode.

First, when a NCU 11 detects arrival of a ring back signal (tonal signal) from the communicating terminal (in Step S20), a phone line 17 is connected to the FAX/TEL judgement unit 10 via the NCU 11 (in Step S21). Then, the FAX/TEL judgement unit 10 starts detecting a sound signal (in Step S22).

This sound signal detection is executed every certain time duration Td (Steps S23 to S26). If a sound signal is detected within the certain time Td (YES in Step S25), it is judged that the communicating terminal is the PHONE 19, and a ringer rings a bell 13 to enable a phone talk via a telephone receiver 12 (in Step S27). Subsequently, it is judged whether the telephone receiver 12 is picked up from a main body of the facsimile machine 1 (in Step S28). If it is judged that the telephone receiver 12 is not picked up (is not set to an off-hook state) (NO in Step S28), the ringer 13 continues to ring a bell (the loop through Steps S27 to S29). When the phone line 17 is disconnected by the communicating terminal during the ringing of the bell (YES in Step S29), this routine proceeds to Step S30 where the FAX/TEL judgement unit 10 disconnects the phone line 17.

On the other hand, when the telephone receiver 12 is picked up in response to the bell of the ringer 13 (YES in Step S28), a phone talk over the phone line 17 with the communicating terminal is enabled (in Step S31). When the phone talk is finished, and a person returns (i.e., hooks on) the telephone receiver 12 to the facsimile machine main body (YES in Step S32), the data reception (this time, the phone talk) is completed.

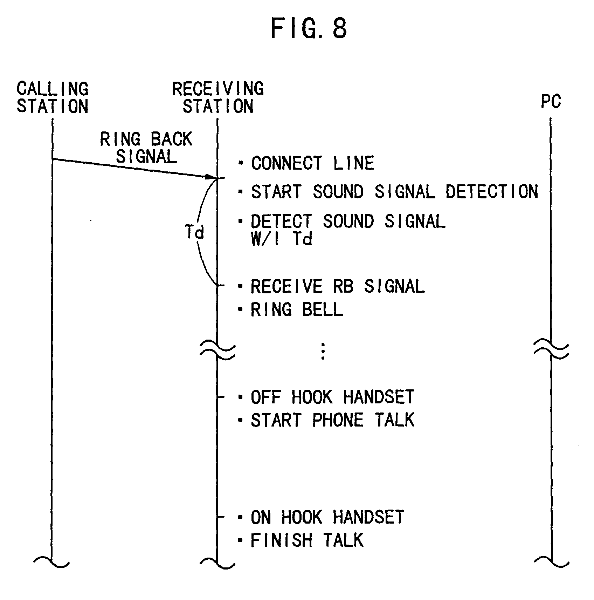

FIG. 8 is a diagram showing a sequence of a signal transmission/reception among a calling station (transmitter), a receiving station (call receiver), and a PC 16 in the case where the communicating terminal (i.e., the calling station) is the PHONE 19, and the facsimile machine 1 is set to the PC RECEIVE mode.

FIG. 8 is different from FIG. 4 in that a sound signal is used as a judgement parameter as to whether the communicating terminal is the FAX 18 or the PHONE 19 in FIG. 8, whereas a CNG signal is used as a judgement parameter in FIG. 4. Specifically, a communication procedure in the second embodiment is basically identical to that in the first embodiment except that the ringer 13 starts ringing a bell based on a detection of a sound signal within the certain time Td in the second embodiment. It should be noted that the ringer 13 is controlled to periodically ring a bell at a certain frequency in the second embodiment, since the CNG signal detection is not implemented in the second embodiment, and accordingly the CNG signal non-detection cannot be used to set a timing for ringing the bell 13.

Referring back to FIG. 6, if a sound signal is not detected within the certain time duration Td after the phone line 17 is connected (YES in Step S26), the FAX/TEL judgement unit 10 judges that the communicating terminal is the FAX 18, and this routine proceeds to Step S33, where a RING code signal is transmitted to the PC 16 at a certain frequency. It should be noted that the RING code signal is repeatedly transmitted at the certain frequency for several times, since the CNG signal detection is not implemented in the second embodiment.

When the PC 16 transmits a command indicative of data reception to the facsimile machine 1 in response to the RING code signal (YES in Step S34), data reception from the FAX 18 starts according to the procedure similar to Steps through S15 to S18 (Steps through S35 to S38).

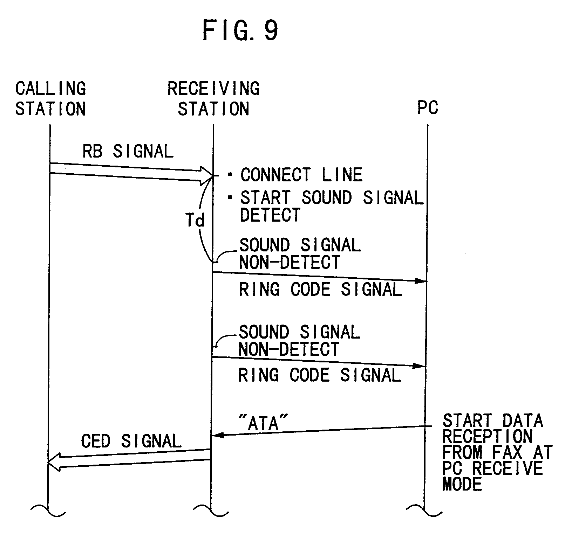

FIG. 9 is a diagram showing a sequence of a signal transmission/reception among the calling station (transmitter), the receiving station (call receiver), and the PC 16 in the case where the communicating terminal (i.e., the calling station) is the FAX 18, and the facsimile machine 1 is set to the PC RECEIVE mode.

FIG. 9 is different from FIG. 5 in that a RING code signal is transmitted to the PC 16 based on a judgement result that a sound signal is not detected within the certain time duration Td (i.e., it is judged that the communicating terminal is the FAX 18), in place of the CNG signal detection in the first embodiment.

A data reception procedure from the FAX 18 according to a command from the PC 16 in the second embodiment is identical to that in the first embodiment. Similar to the alteration of the first embodiment, also in the second embodiment, a judgement by the FAX/TEL judgement unit 10 may be repeated every certain time duration Td for several times, and a RING code signal may be transmitted to the PC 16 for several times based on repeated judgement results that a sound signal is not detected by the FAX/TEL judgement unit 10.

### [Third Embodiment]

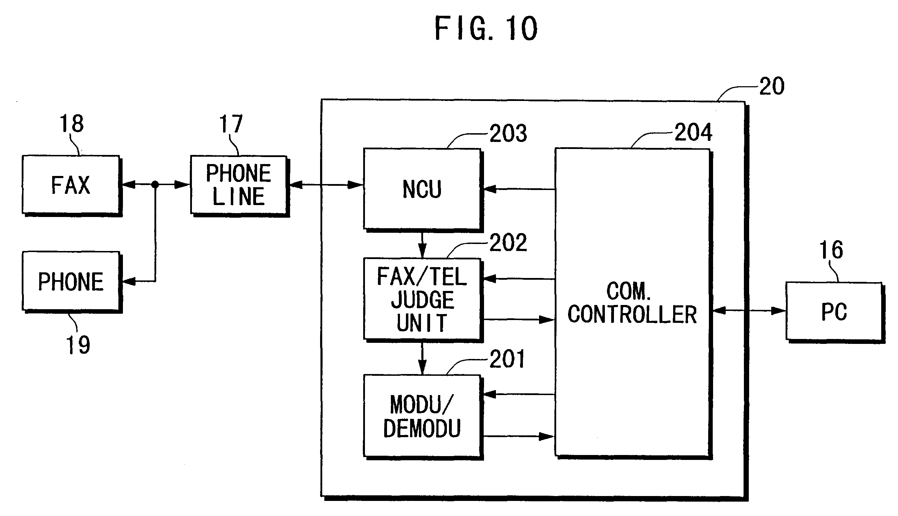

FIG. 10 is a block configuration diagram showing a third embodiment of this invention. A modem 20 is described as a communication device embodying the present invention with reference to FIG. 10. It should be noted that elements in this embodiment which are identical to those in the first and the second embodiments are denoted by the same reference numerals.

The modem 20 comprises a modulator/demodulator 201, a FAX/TEL judgement unit 202, a Net Control Unit (NCU) 203, and a communication controller 204 which respectively correspond to the modulator/demodulator 9, the FAX/TEL judgement unit 10, the NCU 11, and the controller 15. The communication controller 204 is controlled in accordance with an AT command from a PC 16, i.e., in accordance with a communication protocol starting with a command signal of "AT".

The modem 20 transmits/receives a signal in a similar manner as the signal transmission/reception sequence in FIG. 5 upon receiving a ring back signal. More specifically, the modem 20 connects a phone line 17 with the PC 16 upon receiving a ring back signal from a communicating terminal. Then, the modem 20 (FAX/TEL judgment unit 202) starts detecting a CNG signal from the communicating terminal. If a CNG signal is detected within a certain time duration Δt after the line connection, the modem transmits a RING code signal to the PC 16 to notify the PC 16 of arrival of data from the communicating terminal (i.e., FAX 18). The CNG signal detection is repeated for several times, and the RING code signal is transmitted to the PC 16 for several times each time when a CNG signal is detected. When the PC 16 transmits an ATA command starting with a command signal of "ATA" to the modem 20 upon receiving the RING code signal, the modem 20 (the communication controller 204) allows the PC 16 to receive data from the FAX 18 according to a certain communication protocol.

More specifically, the modulator/demodulator 201 demodulates facsimile data which has been transmitted from the FAX 18 via the phone line 17 in the form of an analog signal to a digital signal (analog-to-digital converted data). Subsequently, the digitized data is successively transferred to the PC 16. Thereby, the PC 16 is allowed to receive data from the FAX 18 via the modem 20.

Although the present invention has been fully described by way of example with reference to the accompanying drawings, it is to be understood that various changes and modifications will be apparent to those skilled in the art. Therefore, unless otherwise such changes and modifications depart from the scope of the present invention, they should be construed as being included therein.

## Claims

1. A communication device having a line connector provided between a data terminal equipment and a telephone line for converting data of an analog signal transmitted from a communicating terminal via the telephone line into data of a digital signal to enable the data terminal equipment to receive the data transmitted from the communicating terminal in accordance with a command signal from the data terminal equipment, where the telephone line and the communicating terminal connected by the line connector upon receiving a ring back signal from the communicating terminal,
characterized by:
a judgement unit for judging whether the communicating terminal is a facsimile machine based on a certain signal transmitted from the communicating terminal via the telephone line immediately after the line connection; and
a signal transmitter for transmitting the data terminal equipment a certain arrival signal indicating an arrival of data from the communicating terminal when the judgement unit judges that the communicating terminal is the facsimile machine.

2. The communication device according to claim 1, characterized in that the judgement unit detects a presence of a certain tonal signal from the communicating terminal at a certain frequency to judge whether the communicating terminal is the facsimile machine.

3. The communication device according to claim 1, characterized in that the judgement unit detects a presence of a sound signal from the communicating terminal to judge whether the communicating terminal is the facsimile machine.

4. The communication device according to claim 2 or 3, characterized in that the signal transmitter transmits the arrival signal to the data terminal equipment each time when the sound or tonal signal is detected.

5. The communication device according to one or more of claims 1 - 4, characterized in that the certain signal is a CNG signal issued from the communicating terminal.

6. The communication device according to one or more of claims 1 - 5, characterized by:
a mode setter for setting the communication device at a PC RECEIVE mode to enable transfer of the analog-to-digital converted data from the communicating terminal to the data terminal equipment; and
a signal transmit controller for controlling the communication device to transmit the arrival signal to the data terminal equipment when the facsimile machine is set at the PC RECEIVE mode.

7. The communication device according to one or more of claims 1-6, characterized by:
a ringer for ringing to notify an incoming telephone call from the communicating terminal; a telephone receiver for enabling a telephone communication with the communicating terminal;
a sound controller for controlling the ringer to ring at a certain frequency to notify the incoming telephone call from the communicating terminal when it is judged that the communicating terminal is not the facsimile machine on the PC RECEIVE mode; and
a line connection switcher for connecting the telephone line with the receiver when the receiver is off a hook.

8. The communication device according to claim 7, characterized in that the sound controller controls the ringer to ring when the communicating terminal is judged to be non-facsimile machine based on absence of a tonal signal for a certain time duration after the line connection is made.

9. The communication device according to claim 7, characterized in that: the sound controller controls the ringer to periodically ring up to a certain times at a first frequency when the communicating terminal is judged to be non-facsimile machine based on an absence of a tonal signal for a certain time duration after the line connection is made;
and in that the judgement unit continuously detects a presence of the certain tonal signal from the communicating terminal at a second frequency after the previous detection result found absence of the tonal signal from the communicating terminal.

10. The communication device according to claim 9, characterized in that the first frequency is the same as the second frequency.

11. The communication device according to claim 9, characterized in that the first frequency is different from the second frequency.

12. The communication device according to claim 1, characterized in that the judgement unit detects a presence of a voice signal from the communicating terminal for a certain time period immediately after the line connection is made to judge whether the communicating terminal is the facsimile machine.
